(19) Europäisches Patentamt

European Patent Office

Office européen des brevets

(11) EP 0 782 248 A1

(12) DEMANDE DE BREVET EUROPEEN

(43) Date de publication:
02.07.1997 Bulletin 1997/27

(51) Int Cl.⁶: $H02P\ 7/00$, $H02M\ 7/5387$

(21) Numéro de dépôt: 96402920.1

(22) Date de dépôt: 30.12.1996

(84) Etats contractants désignés:
DE ES FR GB IT

(30) Priorité: 29.12.1995 FR 9515728

(71) Demandeur: VALEO ELECTRONIQUE
94000 Creteil (FR)

(72) Inventeur: Permuy, Alfred
92500 Reuil Malmaison (FR)

(74) Mandataire: Martin, Jean-Jacques
Cabinet REGIMBEAU
26, Avenue Kléber
75116 Paris (FR)

(54) Procédé de commande d'un pont de régulation de charge par modulation de largeur d'impulsions et dipositif d'alimentation comportant un tel pont

(57) Commande d'un pont d'interrupteurs en H caractérisée en ce qu'au cours d'un cycle, le courant prend une valeur crête de signe constant pendant une portion continue correspondant à une fraction du cycle égale à I<V>/UI, où <V> est la tension moyenne appliquée à la charge et U est la tension de la source de tension continue, cette portion étant précédée par une portion de cycle correspondant à une fraction de cycle égale à (1-I<V>/UI)/2 pendant laquelle les deux interrupteurs (I1, I2) du pont en H qui sont reliés à la masse sont fermés (resp. ouverts) et étant suivie par une portion de cycle correspondant également à une fraction de cycle égale à (1-(<V>/UI)/2 pendant laquelle les deux interrupteurs (I1, I2) du pont en H reliés à la masse sont ouverts (resp. fermés).

FIG.1

**Description**

La présente invention est relative à un procédé pour la commande d'un pont en H pour la régulation d'une charge inductive par modulation de largeur d'impulsions.

Elle concerne également un dispositif d'alimentation comportant un tel pont de régulation.

Un tel dispositif est par exemple utilisé pour la régulation d'une charge biphasée, telle qu'un moteur électrique utilisé dans un véhicule automobile, par exemple pour le réglage des sièges, la commande de vitres,etc..

Le pont de régulation d'un tel dispositif est classiquement alimenté par une source de tension continue, telle que la batterie du véhicule. La tension délivrée par cette source est découpée dans le temps selon un procédé de modulation de largeur d'impulsions, de manière à modifier la valeur moyenne du courant circulant dans la charge. A la fréquence de découpage, la charge est de nature essentiellement inductive. Par conséquent, par le terme valeur moyenne utilisé pour des tensions ou des courants, il faut comprendre qu'il s'agit d'une moyenne temporelle réalisée sur plusieurs périodes de découpage. Pour lisser les variations du courant délivré par la source, un condensateur est monté en parallèle entre les deux extrémités du pont.

Or, un tel condensateur de lissage s'avère d'un encombrement important et corollairement d'un coût non négligeable.

Il a déjà été proposé, notamment dans US 5 365 422, d'actionner les interrupteurs du pont en H selon des séquences choisies de façon à minimiser le courant efficace qui traverse les moyens capacitifs montés entre les extrémités dudit pont.

Ceci permet de réduire le dimensionnement des condensateurs de lissage des ponts de régulation de charge par modulation d'impulsions.

La taille et le coût d'un condensateur dépendent en effet fortement du courant efficace qui le traverse.

En minimisant le courant efficace qui traverse les moyens capacitifs montés en parallèle sur le pont de régulation, les séquences de commande du dispositif proposé par l'invention permettent de réduire le dimensionnement - et donc le coût - de ces moyens capacitifs.

Un but de l'invention est de proposer une séquence d'actionnement qui permette d'équilibrer le temps de conduction des différents interrupteurs du pont.

Ce but atteint selon l'invention en ce que le procédé de commande d'un pont d'interrupteurs en H pour la régulation d'une charge par modulation de largeur d'impulsions, ledit pont étant alimenté par une source de tension continue, des moyens capacitifs de lissage étant montés entre les extrémités dudit pont, les séquences selon lesquelles les interrupteurs dudit pont sont actionnées étant choisies de façon à minimiser le courant efficace qui traverse lesdits moyens capacitifs, caractérisé en ce qu'au cours d'un cycle, le courant prend une valeur crête de signe constant pendant une portion continue correspondant à une fraction du cycle égale à I<V>/UI, où <V> est la tension moyenne appliquée à la charge et U est la tension de la source de tension continue, cette portion étant précédée par une portion de cycle correspondant à une fraction de cycle égale à (1-I<V>/UI)/2 pendant laquelle les deux interrupteurs du pont en H qui sont reliés à la masse sont fermés (resp. ouverts) et étant suivie par une portion de cycle correspondant également à une fraction de cycle égale à (1-I<V>/UI)/2 pendant laquelle les deux interrupteurs du pont en H reliés à la masse sont ouverts (resp. fermés).

D'autres caractéristiques et avantages de l'invention ressortiront encore de la description qui suit. Cette description est purement illustrative et non limitative. Elle doit être lue en regard des dessins annexés sur lesquels :

- la figure 1 représente schématiquement un dispositif d'alimentation à pont en H ;
- les figures 2a et 2b illustrent la commande des interrupteurs du pont en H de la figure 1, selon un mode de régulation conforme à un art antérieur connu ;
- les figures 3a et 3b, 4a et 4b, 5a et 5b, 6a et 6b, 7a et 7b illustrent plusieurs séquences de commande conformes à l'invention ;
- la figure 8 illustre le gain en courant efficace que permet l'invention ;

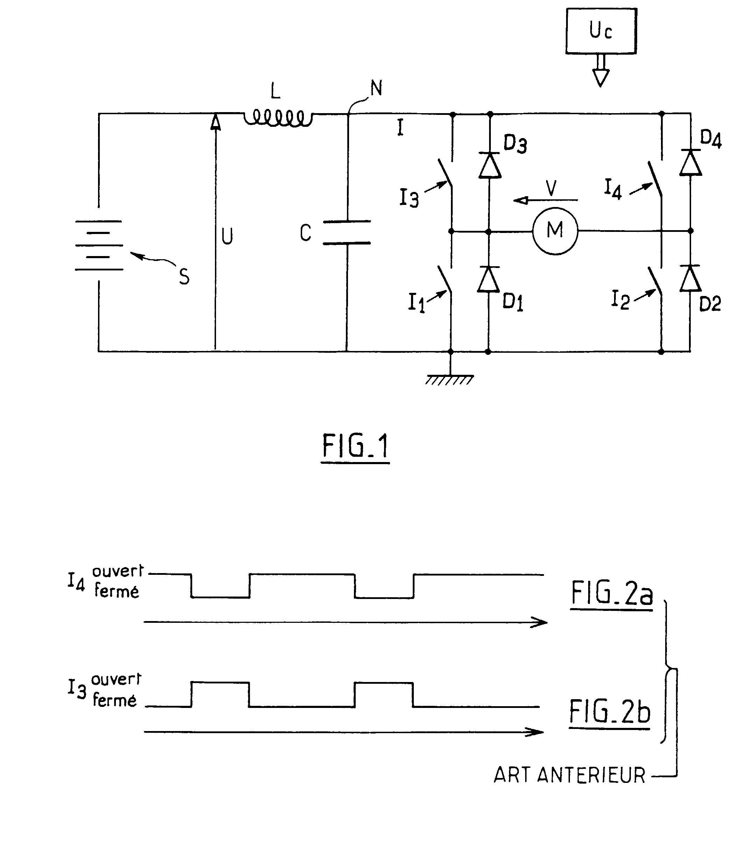

Le dispositif d'alimentation à pont en H illustré sur la figure 1 comporte quatre interrupteurs I1 à I4, montés en H par rapport à une charge bipolaire M. Ce pont en H est alimenté par une source de tension S à travers un circuit de filtrage 1.

Les interrupteurs I1 et I2 sont montés entre la masse et respectivement l'une et l'autre des extrémités de la charge M, tandis que les interrupteurs I3 et I4 sont montés entre un noeud commun N et respectivement les extrémités de la charge M reliées à l'interrupteur I1 et à l'interrupteur I2.

Le circuit de filtrage 1 comporte un condensateur C monté entre le noeud N et la masse, ainsi qu'une inductance L montée entre le noeud N et la source de tension S.

Les interrupteurs I1 à I4 sont des transistors de type MOS. Ils sont commandés par une unité de commande $U_c$ de la façon qui va maintenant être décrite.

Des diodes D1 à D4, dites diodes de roue libre, sont montées en parallèle sur les interrupteurs I1 à I4, ainsi qu'il est connu de l'Homme du métier.

Avantageusement, les interrupteurs I1 et I3 (resp. I2 et I4) sont commandés de façon opposée pour limiter les pertes dans les diodes de roue libre. Ils doivent être non recouvrants pour éviter les court-circuits.

Généralement, dans les régulations de l'art antérieur, les interrupteurs I1 et I4 (resp. I2 et I3) étaient commandés de façon à être ouverts ou fermés simultanément.

C'est ce qu'illustrent les figures 2a et 2b sur lesquelles on a représenté une séquence classique de commande des interrupteurs I1 et I2.

Le courant dans la charge M prenait donc alternativement au cours d'un cycle la valeur i ou -i, i étant une valeur de courant crête.

La modulation par largeur d'impulsions consistait alors, pour une fréquence de cycle donnée, à asservir les temps d'ouverture $T_{01}$ et $T_{02}$ des différents interrupteurs sur un signal d'erreur de fonctionnement de la charge.

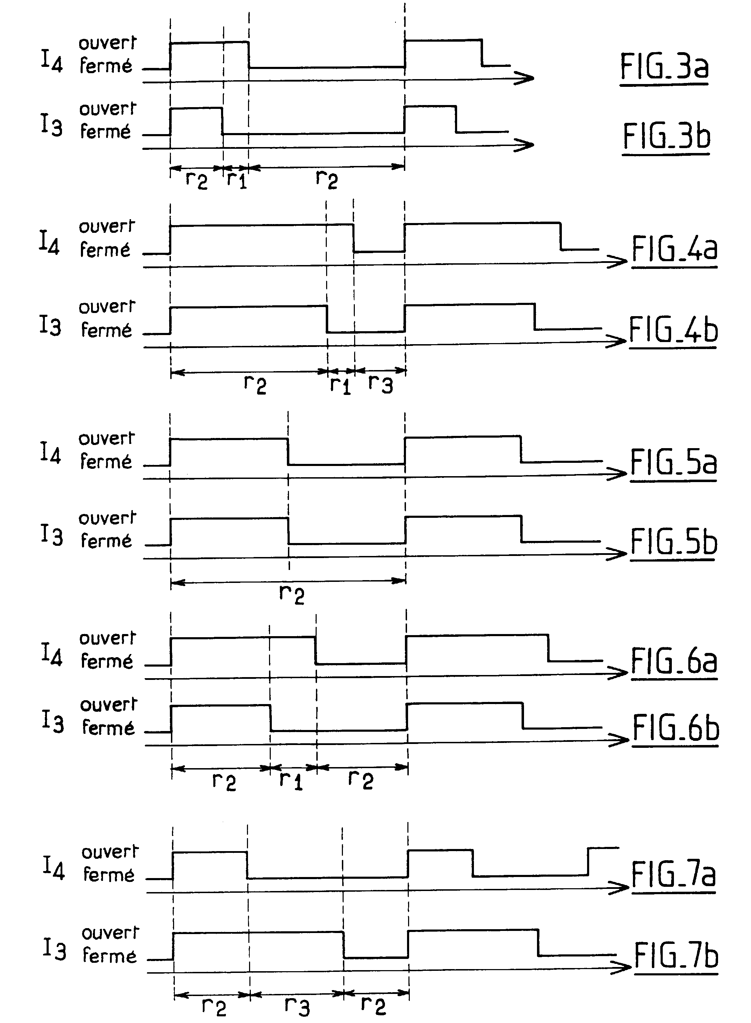

L'invention propose une séquence de commande du type de celle illustrée sur les figures 3a et 3b et suivantes, dans laquelle les durées des différents états de commande sont choisies pour minimiser le courant efficace qui traverse le condensateur C.

Dans la suite du texte, U désigne la tension de la batterie, <V> la tension moyenne que l'on veut appliquer à la charge M, i le courant crête appliqué à la charge M, I le courant instantané qui traverse la charge M.

On appelle en outre $r_1$, $r_2$, $r_3$ les rapports cycliques correspondant aux différentes commandes possibles du moteur M par le pont en H :

* $r_1$ correspond aux portions de cycle pendant lesquelles les interrupteurs I1 et I4 sont ouverts et les interrupteurs I2 et I3 sont fermés.

Pendant ces portions de cycle, le courant instantané I est égal à i et le courant efficace qui traverse le condensateur C est

$$\Delta I1 = (1 - <V>/U)i$$

* $r_2$ correspond aux portions du cycle pendant lesquelles les interrupteurs I3 et I4 sont ouverts (resp. fermés) tandis que les interrupteurs I1 et I2 sont fermés (resp. ouverts).

Pendant ces portions de cycle, le courant instantané I est nul et le courant efficace qui traverse le condensateur C est :

$$\Delta I_2 = <V>/U . i$$

* $r_3$ correspond aux portions du cycle pendant lesquelles les interrupteurs I2 et I3 sont ouverts et les interrupteurs I1 et I4 sont fermés.

Pendant ces portions de cycle, le courant instantané I est égal à -i et le courant efficace qui traverse le condensateur C est

$$\Delta I_3 = - (1 + <V>/U)i$$

Etant donné que les rapports cycliques $r_1$, $r_2$ et $r_3$ vérifient :

$$r_1 + r_2 + r_3 = 1$$

et que de plus

$$<V> = r_1 U - r_3 U,$$

On démontre que le courant efficace qui traverse le condensateur est :

$$i_{Ceff} = \sqrt{r_1(\Delta I_1)^2 + r_2(\Delta I_2)^2 + r_3(\Delta I_3)^2}$$

$$= \sqrt{(2r_1 - <V>/U - (<V>/U)^2)i^2}$$

On sait par ailleurs que la quantité $r_1$ - $<V>/U$, qui est égale à $r_3$, doit être positive.

Par conséquent, le courant efficace qui traverse le condensateur C est minimum pour

\* $r_1 = <V>/U$, $r_3 = 0$, $r_2 = 1$ - $<V>/U$

si $<V>$ est positif

\* $r_1 = 0$, $r_3 = - <V>/U$, $r_2 = 1 + <V>/U$

si $<V>$ est négatif.

Par conséquent, dans les deux cas, le rapport cyclique de la (ou des) portion(s) de cycle pendant lesquelles le courant I est nul, est égal à 1-I$<V>$/UI. Le courant I prend une valeur crête de signe constant (i ou-i) pendant le reste du cycle.

On a illustré sur les figures 3a, 3b et 4a, 4b deux séquences de commande possibles dans le cas où $<V>/U$ est égal à 0,1.

Dans les deux cas, le cycle présente une phase de 10 % qui correspond au rapport cyclique $r_1$, pendant laquelle les interrupteurs I1 et I4 sont ouverts et les interrupteurs I2 et I3 sont fermés.

Pendant le reste du cycle, les interrupteurs I1 à I4 sont dans l'état qui correspond au rapport cyclique $r_2$, c'est à dire que les interrupteurs I3 et I4 sont :

- soit ouverts tandis que les interrupteurs I1 et I2 sont fermés,
- soit fermés tandis que les interrupteurs I1 et I2 sont ouverts.

Les figures 5a et 5b illustrent une séquence permettant un fonctionnement à $<V>/U = 0$.

Selon cette séquence de commande, les interrupteurs I3 et I4 sont ouverts sur la moitié du cycle et fermés sur l'autre moitié.

On notera qu'une telle séquence permet d'équilibrer la puissance qui circule à travers les différents interrupteurs I1 à I4.

De façon plus générale, pour une valeur $<V>/U$ donnée, la séquence de commande suivante permet un fonctionnement sensiblement équilibré du pont en H :

- pendant une première phase correspondant à une fraction de cycle égale à (1-I(V>/UI)/2, les deux interrupteurs I1 et I2 du pont en H qui sont reliés à la masse sont fermés (resp. ouverts), tandis que les interrupteurs I3 et I4 sont fermés (resp. ouverts),
- puis les interrupteurs sont actionnés par l'unité de commande $U_c$ de façon que le courant qui traverse la charge M prenne sa valeur crête (i ou -i) pendant une fraction du cycle égale à I$<V>$/UI,
- enfin, les deux interrupteurs I1 et I2 sont ouverts (resp. fermés) pendant une fraction de cycle égale à (1-I$<V>$/UI)/2.

Une telle séquence a été illustrée sur les figures 6a, 6b pour $<V>/U = 0,2$.

L'interrupteur I3 est ouvert sur une première partie du cycle correspondant à une fraction de 60% de celui-ci, puis fermé sur le reste du cycle.

L'interrupteur I4 est quant à lui ouvert sur une première partie correspondant à une fraction de 40% du cycle et est fermé sur le reste du cycle.

Par conséquent, sur un cycle, le fonctionnement correspondant au rapport cyclique $r_2$ est réparti de façon équilibrée de part et d'autre d'une portion correspondant à 20% du cycle pendant laquelle le fonctionnement correspond à celui du rapport cyclique $r_1$.

La séquence de commande illustrée sur les figures 7a et 7b permet quant à elle un fonctionnement équilibré avec $<V>/U = -0,4$.

Les interrupteurs I1 à I4 sont dans leur état correspondant au rapport cyclique $r_3$ sur une portion correspondant à 40% du cycle. De part et d'autre de cette portion, ils sont respectivement dans l'un et l'autre de leurs états correspondant à la phase $r_2$ pendant des fractions de cycle de 30%.

Dans tous les cas qui viennent d'être décrits, le courant efficace qui traverse les condensateurs est :

$$i_{Ceff} : \sqrt{<V>/U \ (1-<V>/U)i^2}$$

alors que, dans le cas d'un fonctionnement classique tel qu'illustré sur les figures 2a et 2b, le courant efficace qui traverse le condensateur est

$$i_{Ceff} = \sqrt{[1- (<V>/U)^2]\ i^2}$$

Par conséquent, dans le cas d'un fonctionnement du type proposé par l'invention, le courant efficace à travers le condensateur C est toujours inférieur à celui obtenu dans le cas d'un fonctionnement classique.

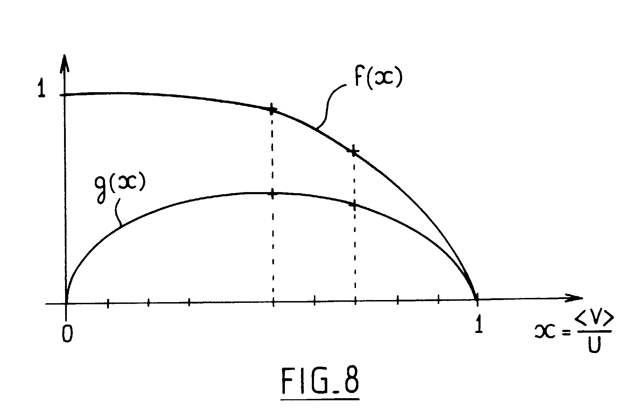

C'est ce qu'illustre la figure 8 sur laquelle on a porté les courbes

$$f(x) = \sqrt{1 - x}$$

et

$$g(x) = \sqrt{x(1 - x)}.$$

Par exemple, si l'on suppose $i = i_0<V>/U$, dans le cas d'une commande classique, le courant efficace est maximal pour $<V>/U = 1/\sqrt{2}$ et vaut alors $0,5\ i_0$.

Pour un traitement du type de celui proposé par l'invention, le courant est maximal pour $<V>/U = 3/4$ et prend alors comme valeur $0,33\ i_0$.

Par conséquent, avec une séquence de commande du type de celle qui vient d'être décrite, le condensateur C peut être dimensionné pour supporter un courant efficace maximal de $0,33\ i_0$ au lieu de $0,5\ i_0$.

## Revendications

1. Procédé de commande d'un pont d'interrupteurs en H (I1 à I4) pour la régulation d'une charge par modulation de largeur d'impulsions, ledit pont étant alimenté par une source de tension continue (S), des moyens capacitifs de lissage (C) étant montés entre les extrémités dudit pont, les séquences selon lesquelles les interrupteurs (I1 à I4) dudit pont sont actionnées étant choisies de façon à minimiser le courant efficace qui traverse lesdits moyens capacitifs (C), caractérisé en ce qu'au cours d'un cycle, le courant prend une valeur crête de signe constant pendant une portion continue correspondant à une fraction du cycle égale à I$<V>$/UI, où $<V>$ est la tension moyenne appliquée à la charge et U est la tension de la source de tension continue, cette portion étant précédée par une portion de cycle correspondant à une fraction de cycle égale à $(1-I<V>/UI)/2$ pendant laquelle les deux interrupteurs (I1, I2) du pont en H qui sont reliés à la masse sont fermés (resp. ouverts) et étant suivie par une portion de cycle correspondant également à une fraction de cycle égale à $(1-I<V>/UI)/2$ pendant laquelle les deux interrupteurs (I1, I2) du pont en H reliés à la masse sont ouverts (resp. fermés).

2. Dispositif pour l'alimentation d'une charge comportant un pont d'interrupteurs (I1 à I4), une source de tension continue (S) qui alimente ledit pont, des moyens capacitifs (C) montés entre les extrémités dudit pont, ainsi qu'une unité de commande ($U_c$) qui actionne les interrupteurs (I1 à I4) dudit pont de façon à réguler la charge (M, $M_T$) par modulation de largeur d'impulsions, caractérisé en ce que l'unité de commande ($U_c$) actionne les interrupteurs (I1 à I4) dudit pont selon des séquences de commande d'un procédé conforme à la revendication 1.

3. Dispositif d'alimentation d'un moteur électrique de véhicule automobile, caractérisé en ce qu'il est constitué par un dispositif selon la revendication 2.

FIG.1

$I_4$ ouvert fermé

FIG.2a

$I_3$ ouvert fermé

FIG.2b

ART ANTERIEUR

FIG.3a

FIG.3b

FIG.4a

FIG.4b

FIG.5a

FIG.5b

FIG.6a

FIG.6b

FIG.7a

FIG.7b

FIG.8

Office européen
des brevets

**RAPPORT DE RECHERCHE EUROPEENNE**

Numero de la demande

EP 96 40 2920

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 365 422 A (CLOSE ERIC C ET AL) 15 Novembre 1994<br>* colonne 3, ligne 1 - ligne 31 *<br>* colonne 10, ligne 18 - ligne 37 *<br>--- | 1-3 | H02P7/00<br>H02M7/5387 |
| A | EP 0 613 235 A (AEROSPATIALE) 31 Août 1994<br>* page 2, ligne 1 - page 4, ligne 30 *<br>--- | 1-3 | |
| A | EP 0 259 005 A (GUZIK TECHNICAL ENTERPRISES IN) 9 Mars 1988<br>* colonne 3, ligne 36 - colonne 4, ligne 4 *<br>----- | 1-3 | |
| | | | **DOMAINES TECHNIQUES RECHERCHES (Int.Cl.6)**<br><br>H02P<br>H02M |

Le présent rapport a été établi pour toutes les revendications

| Lieu de la recherche | Date d'achèvement de la recherche | Examinateur |
|---|---|---|
| LA HAYE | 1 Avril 1997 | Bourbon, R |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant